# EUROPEAN PATENT APPLICATION

(11) **EP 4 647 228 A1**
(43) Date of publication of application: **12.11.2025**
(21) Application number: 24819440.9
(22) Date of filing: 15.01.2024
(51) Int. Cl.: B29C 43/02, B29C 43/36, B29C 43/32, B29L 31/00

(54) **MOLDING DEVICE AND MOLDING METHOD**

(30) Priority: 08.06.2023 KR 20230073670
(71) Applicant: LG Energy Solution, Ltd., Seoul 07335 (KR)
(72) Inventor: GWAK, Myeong Jun, Daejeon 34122 (KR)
(74) Representative: Plasseraud IP
(86) International application number: PCT/KR2024/000709
(87) International publication number: WO 2024/253286

(57) **Abstract**

The present invention relates to a forming apparatus and a forming method. The forming apparatus includes a first die, a second die disposed inside the first die to press an object to be pressed, a stripper disposed to face the first die and the second die so as to press the object to be pressed, a connection part configured to connect the first die to the second die and provided with a compression member, and a punch disposed inside the second die to press the object to be pressed, wherein the second die is configured to press the object to be pressed after the object to be pressed is compressed by the first die and the stripper.

## Description

### TECHNICAL FIELD

The present application claims the benefit of the priority of Korean Patent Application No. 10-2023-0073670, filed on June 8, 2023, which is hereby incorporated by reference in its entirety.

The present invention relates to a forming apparatus and a forming method, and more particularly, to an apparatus for pressing an object to be pressed and a forming method.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries are receiving a lot of attention as an energy source in a variety of products such as mobile devices and electric vehicles. Particularly, secondary batteries are an excellent energy resource, which is capable of replacing the use of existing products using fossil fuels, and are attracting attention as an eco-friendly energy source because the secondary batteries do not generate by-products due to the energy use.

Secondary batteries have attracted considerable attention as power sources for electric vehicles (EVs), hybrid electric vehicles (HEVs), and plug-in hybrid electric vehicles (PHEVs), which have been developed to solve limitations, such as air pollution, caused by existing gasoline and diesel vehicles that use fossil fuels. In other words, the secondary batteries are used in the form of a battery pack including a plurality of battery modules.

In general, a pouch-type battery case is manufactured by performing press processing on a pouch film to form a cup part. In addition, when the cup part is formed, an electrode assembly is accommodated in the cup part, and then, a side of the cup part is sealed to manufacture a secondary battery.

In the related art, punch pressing is performed in a state in which a pouch is fixed through a die and a stripper to perform a forming operation of a pouch film. The pouch film mainly contains an aluminum material. Here, when the punch presses the pouch film, and forming proceeds, aluminum is stretched at a corner edge of the punch, and thus, there is a problem in that a residual rate of aluminum is lowered.

### DISCLOSURE OF THE INVENTION

### TECHNICAL PROBLEM

The present invention has been invented to solve the above problem and relates to a forming apparatus and a forming method, in which an object to be pressed is secondarily pressed to increase in a stretched portion and disperse a portion at which stress is concentrated, thereby preventing cracks and disconnection from occurring so that deeper forming is performed, and wrinkles are developed.

### TECHNICAL SOLUTION

A forming apparatus according to an embodiment of the present invention may include: a first die; a second die disposed inside the first die to press an object to be pressed; a stripper disposed to face the first die and the second die so as to press the object to be pressed; a connection part configured to connect the first die to the second die and provided with a compression member; and a punch disposed inside the second die to press the object to be pressed.

The second die may be configured to press the object to be pressed after the object to be pressed is compressed by the first die and the stripper.

The second die may include: a pressing part configured to press the object to be pressed; and a support to which the connection part is connected.

The forming apparatus may further include a driving part provided to transmit force by which the support ascends.

The compression member may be disposed between the first die and the support in the connection part, and the first die may move vertically by receiving the force from the compression member.

The compression member may include at least one of a spring or a cylinder.

The connection part may be provided in plurality along an outer circumference on which the first die is disposed.

The connection part may further include a post coupled to the first die and the support to connect the first die to the support, and the compression member may be disposed on the post.

A hole into which the post is inserted may be defined in the first die, and the connection part may further include a bearing provided to prevent damage from occurring due to friction between the post and the hole.

The first die may be disposed outside the pressing part to press the object to be pressed, and the punch may be disposed inside the pressing part to press the object to be pressed.

The punch may be fixed so as not to move vertically, and the first die and the second die may move vertically.

A forming method according to an embodiment of the present invention may include: a first process of fixing an object to be pressed by a stripper and a first die; a second process in which a second die connected to the first die ascends to press the object to be pressed by the stripper and a punch; and a third process in which the second die further ascends to additionally press the object to be pressed by a pressing part of the second die and the punch, wherein the pressing part may be disposed inside the first die, the punch may be disposed inside the pressing part, and the first die and the second die may be connected to each other by a connection part of a compression member.

### ADVANTAGEOUS EFFECTS

In the forming apparatus and the forming method according to the present invention, the object to be pressed may be pressed to be divided into the two stages to increase in the stretched portion occurring in the object to be pressed, thereby preventing the cracks and the disconnection from occurring after the object to be pressed is pressed, increasing in residual rate after the pressing, and preventing the wrinkles from occurring in the object to be pressed.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a plan view illustrating a first die and a second die of a forming apparatus according to an embodiment of the present invention.
FIG. 2 is a schematic cross-sectional view of the forming apparatus according to an embodiment of the present invention.
FIG. 3 is a cross-sectional view illustrating a modified example of a connection part illustrated in FIG. 2.
FIG. 4 is a flowchart of a forming method according to another embodiment of the present invention.
FIG. 5 is a view illustrating a first process in the forming method according to another embodiment of the present invention.
FIG. 6 is a view illustrating a second process in the forming method according to another embodiment of the present invention.
FIG. 7 is a view illustrating a third process in the forming method according to another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Forming apparatus

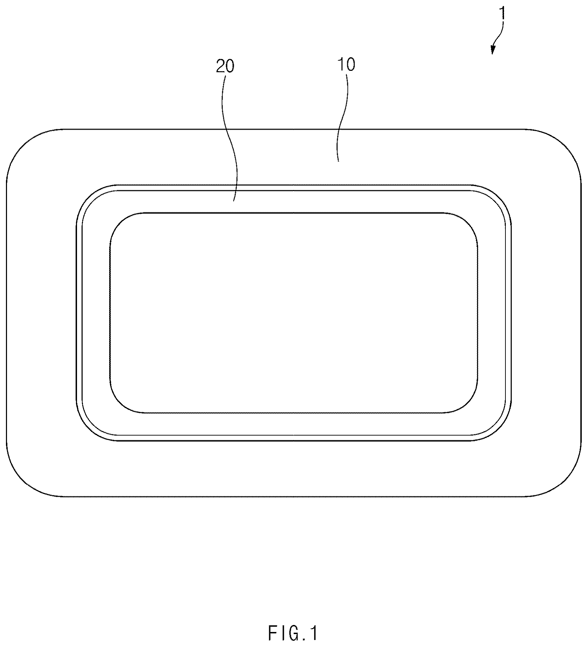

Hereinafter, a forming apparatus 1 will be described in detail with reference to FIGS. 1 to 5.

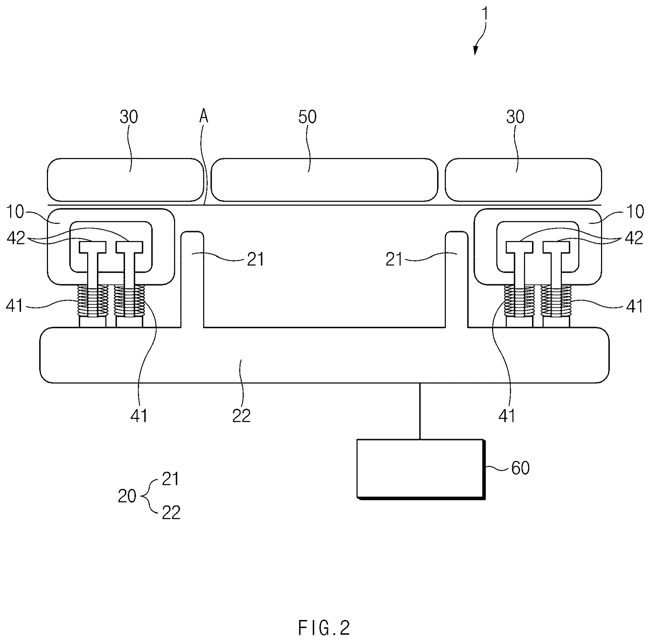

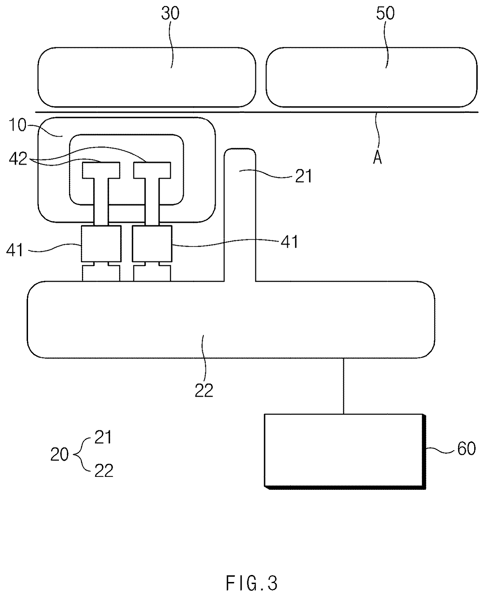

FIG. 1 is a plan view illustrating a first die and a second die of a forming apparatus according to an embodiment of the present invention, FIG. 2 is a schematic cross-sectional view of the forming apparatus according to an embodiment of the present invention, and FIG. 3 is a cross-sectional view illustrating a modified example of a connection part illustrated in FIG. 2.

Referring to FIGS. 1 to 3 and 5, the forming apparatus 1 according to the present invention may include a first die 10, a second die 20, a stripper 30, a connection part 40, and a punch 50.

The first die 10 may fix an object A to be pressed (hereinafter, referred to as a pressed object). The first die 10 may be disposed along an outermost circumference of the forming apparatus 1. The first die 10 may face the stripper 30 to fix the pressed object A. The first die 10 may be connected to the second die 20, which will be described later. The first die 10 may be connected to the second die 20 to move vertically. The first die 10 may have an upper portion having a flat surface. An edge of the first die 10 may be curved to prevent stress from being concentrated to a specific portion when the pressed object A is pressed.

The second die 20 may be disposed inside the first die 10 to press the pressed object A. The second die 20 may move vertically by a driving part 60, which will be described later. The second die 20 may be connected to the first die 10.

The stripper 30 may face the first die 10 to press the pressed object A. The stripper 30 may fix the pressed object A. Mainly, the stripper 30 may serve to fix the pressed object A together with the first die 10. The stripper 30 may face the second die 20 to press the pressed object A. A bottom surface of the stripper 30 may be provided as a flat surface. The stripper 30 may apply a certain pressure to the pressed object A by receiving a certain pressure from an upper portion by a cylinder or the like.

The connection part 40 may include a compression member 41. The connection part 40 may be provided to connect the first die 10 to the second die 20. The connection part 40 may be provided in plurality along the outer circumference on which the first die 10 is disposed. The connection part 40 may further include a post 42. The post 42 may be illustrated as a cylindrical pillar, but is not limited thereto and may have various shapes. The connection part 40 may further include a bearing (not shown). The bearing may be disposed to prevent friction from occurring in a hole in which the post 42 and the first die 10 are coupled to each other.

The connection part 40 may connect the first die 10 to the second die 20 so that when the second die 20 receives ascending force, the force may be transmitted to the first die 10. The connection part 40 may be provided in plurality. The connection part 40 may have enough rigidity to withstand the force transmitted from the compression member 41. The connection part 40 may be coupled to the second die 20 and may be connected to the first die 10 by being inserted into the hole to be described later.

The punch 50 may be disposed inside the second die 20 to press the pressed object A. The punch 50 may be fixed so as not to move vertically. Since the punch 50 does not move vertically, the first die 10 and the second die 20 may move vertically to press the pressed object A. The pressed object A may be pressed to match a shape of the punch 50 so as to be formed in a target shape.

The punch 50 may have a flat bottom surface to press the pressed object A. Since the pressed object A is pressed by being in direct contact with the punch 50, an edge portion of the punch 50 may be provided in a curved shape rather than being completely angled, and thus, when the pressed object A is pressed, cracks or tearing may be prevented from occurring.

In the forming apparatus 1 according to the present invention, the second die 20 may be provided to press the pressed object A after the pressed object A is compressed by the first die 10 and the stripper 30. In addition, as the second die 20 ascends, the first die 10 may also ascends, and thus, the pressed object A may be pressed by the ascending of the second die 20.

The second die 20 may include a pressing part 21 and a support 22. The pressing part 21 and the support 22 may be made of the same material. The pressing part 21 and the support 22 may be integrated with each other. The support 22 may be provided to protrude from the top surface of the pressing part 21.

The pressing part 21 may press the pressed object A. The first die 10 may be disposed outside the pressing part 21 to press the pressed object A. The punch 50 may be disposed inside the pressing part 21 to press the pressed object A. The pressing part 21 needs to have sufficient rigidity to press the object to be pressed A.

A portion of the pressing part 21, which directly presses the pressed object A, may be provided as a curve, and thus, when the pressed object A is pressed, stress applied to the pressed object may be dispersed. The pressing part 21 may be provided to have a height sufficient to press the pressed object A together with the first die 10 when the compression member 41 is maximally compressed. When the compression member 41 is maximally compressed, the first die 10 and the pressing part 21 may press the pressed object A on the same plane to uniformly press the pressed object A.

The support 22 may be connected to the connection part 40. The support 22 may receive power from the driving part 60, which will be described later. The support 22 may be provided to face the punch 50 so as to press the pressed object A.

The forming apparatus 1 according to the present invention may further include the driving part 60. The driving part 60 may be provided to transmit force by which the support 22 ascends.

The compression member 41 may be disposed between the first die 10 and the support 22 in the connection part 40. The compression member 41 may include a spring. However, it is not limited to this, and as illustrated in FIG. 3, the compression member 41 may include a cylinder. The compression member 41 may be disposed on the post 42. The compression member 41 may be compressed to transmit compressive force to the first die 10, and thus, the pressed object A may be better fixed and pressed.

The first die 10 may be provided to move vertically by receiving the force from the compression member 41. The hole into which the post 42 is inserted may be defined in the first die 10. The bearing may be provided to prevent damage due to friction between the post 42 and the hole.

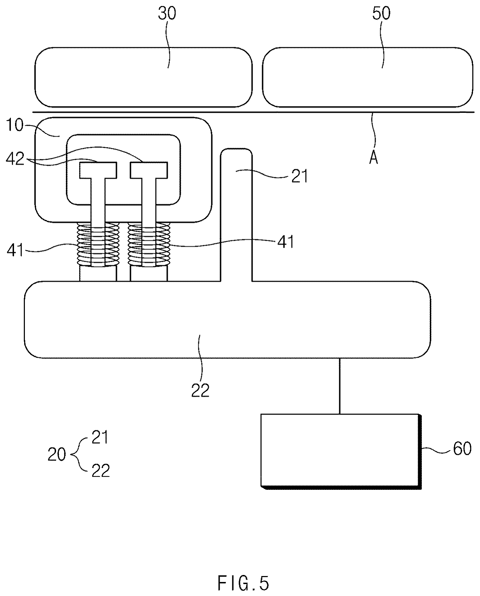

The pressed object A may be a pouch film. The pouch film includes a first resin layer defining a top surface, a second resin layer defining a bottom surface, and a metal layer disposed between the first resin layer and the second resin layer. The pressed object A may be pressed and stretched by the forming apparatus 1. The pressed object A may be an object for manufacturing a case of a pouch battery. Referring to FIGS. 5 to 7, the portion at which the pressed object A is pressed and mainly stretched may be confirmed, and this will be described in detail in the forming method to be described later.

The forming apparatus 1 according to the present invention may include the first die 10 and the second die 20, and the first die 10 and the second die 20 may be connected by the connection part 40. The connection part 40 may include at least one of the spring 411 or the cylinder 412. When the driving part 60 transmits the power to the second die 20, the second die 20 ascends. When the connection part 40 includes the spring 411, the spring 411 may be compressed as the second die 20 ascends, and the force caused by the compression force of the spring 411 may be transmitted to the first die 10.

There is also an effect of removing wrinkles that occur as the pressed object A is introduced into the punch during the process.

### Forming method

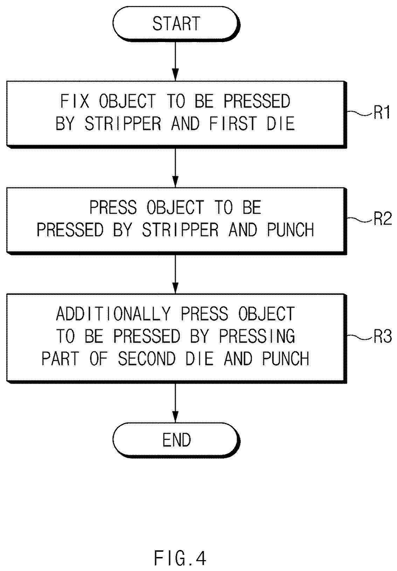

Hereinafter, a forming method will be described in detail with reference to FIGS. 4 to 7.

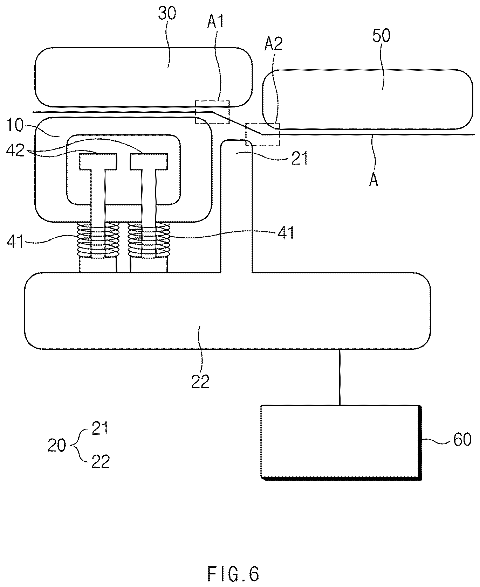

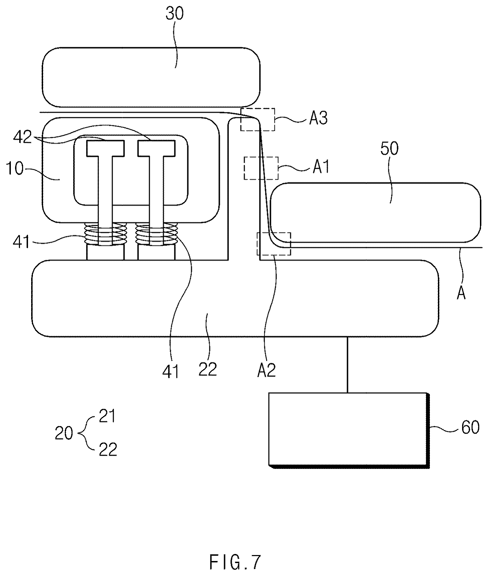

FIG. 4 is a flowchart of a forming method according to another embodiment of the present invention, FIG. 5 is a view illustrating a first process in the forming method according to another embodiment of the present invention, FIG. 6 is a view illustrating a second process in the forming method according to another embodiment of the present invention, and FIG. 7 is a view illustrating a third process in the forming method according to another embodiment of the present invention.

Hereinafter, a forming method using the forming apparatus 1 described above will be described as another embodiment of the present invention.

Referring to FIGS. 4 to 7, the forming method according to another embodiment of the present invention may include a first process (R1), a second process (R2), and a third process (R3). The forming method may include the first process (R1), the second process (R2), and the third process (R3), and thus, the pressed object A may be pressed into a desired shape so that a stretched portion of the pressed object A is formed to be deeper compared to the conventional method.

In the first process (R1), the pressed object A may be fixed by the stripper 30 and the first die 10. The first die 10 ascends by receiving the power from the driving part 60. Here, the stripper 30 facing the first die 10 may fix the pressed object A at the upper portion through the pressure from the cylinder, etc. The pressed object A begins to be fixed and pressed.

In the second process (R2), the pressed object A may be pressed by the stripper 30 and the punch 50 as the second die 20 connected to the first die 10 ascends. In the second stage (R2), the second die 20 ascends further compared to the first process (R1). Here, as the second die 20 ascends, the first die 10 also ascends, and a height of the first die 10 becomes higher than the fixed punch 50, so that the pressed object A is pressed. Here, the pressed object A is stretched, and a first stretched portion A1 and a second stretched portion A2 are formed.

In the second process (R2), a gap between the first die 10 and the punch 50 is formed to be larger compared to the conventional method. Therefore, since an angle at which the pressed object A is stretched is small, an amount of pressed object A introduced into the punch 50 may increase.

The first stretched portion A1 is formed at an inner edge at which the stripper 30 and the first die 10 face each other. The second stretched portion A2 is formed at a point at which the pressed object A meets the punch 50.

In the third process (R3), the second die 20 ascends further so that the pressed object A is additionally pressed by the pressing part 21 of the second die 20 and the punch 50. In the third process (R3), the second die 20 ascends higher compared to the second process (R2), and the first die 10 also ascends through the connection part 40 connected to the second die 20. The compression member 41 included in the connection part 40 is compressed, and as a result, the pressed object A is pressed by the pressing part 21 included in the second die 20. Here, the stretching occurs at an inner edge at which the stripper 30 and the pressing part 21 face each other to form a third stretched portion A3. The first stretched portion A1 formed in the second process (R2) is disposed inside the pressing part 21 as the pressed object A is introduced further toward the punch 50.

The pressing part 21 may be disposed inside the first die 10, and the punch 50 may be disposed inside the pressing part 21. The first die 10 and the second die 20 may be connected by the connection part 40 provided with the compression member 41.

In the forming method according to the present invention, the first die 10 and the second die 20 may be provided to perform the first process (R1), the second process (R2), and the third process (R3). The second die 20 may be provided, and as described above, a distance between the first die 10 and the punch 50 increases at the height at which the first die 10 and the stripper are in contact with each other.

Therefore, since the angle at which the pressed object A is stretched becomes smaller compared to the conventional method, the amount of pressed object A introduced into the punch increases. In addition, the pressed object A may be primarily pressed by the first die 10 and the punch to form the first stretched portion A1 and the second stretched portion A2, and the pressed object A may be secondarily pressed to form the third stretched portion A3, and thus, the stretched portion may increase compared to the conventional method to increasing in amount of pressed object A introduced into the punch 50 and add a stress concentration portion. Due to this effect, there is an effect of deep forming the pressed object A, that is, forming the pressed object A to be deeper than its original shape.

In addition, since the stress concentration portion is added, there is an effect of reducing possibility that the pressed object A is broken or cracked due to the pressing.

### [Description of the Symbols]

1: Forming apparatus
10: First die
20: Second die
21: Pressing part
22: Support
30: Stripper
40: Connection part
41: Compression member
411: Spring
412: Cylinder
42: Post
50: Punch

## Claims

1. A forming apparatus comprising:
a first die;
a second die disposed inside the first die to press an object to be pressed;
a stripper disposed to face the first die and the second die so as to press the object to be pressed;
a connection part configured to connect the first die to the second die and provided with a compression member; and
a punch disposed inside the second die to press the object to be pressed,
wherein the second die is configured to press the object to be pressed after the object to be pressed is compressed by the first die and the stripper.

2. The forming apparatus of claim 1, wherein the second die comprises:
a pressing part configured to press the object to be pressed; and
a support to which the connection part is connected.

3. The forming apparatus of claim 2, further comprising a driving part provided to transmit force by which the support ascends.

4. The forming apparatus of claim 2, wherein the compression member is disposed between the first die and the support in the connection part, and
the first die moves vertically by receiving the force from the compression member.

5. The forming apparatus of claim 2, wherein the compression member comprises at least one of a spring or a cylinder.

6. The forming apparatus of claim 1, wherein the connection part is provided in plurality along an outer circumference on which the first die is disposed.

7. The forming apparatus of claim 2, wherein the connection part further comprises a post coupled to the first die and the support to connect the first die to the support, and
the compression member is disposed on the post.

8. The forming apparatus of claim 7, wherein a hole into which the post is inserted is defined, and
the connection part further comprises a bearing provided to prevent damage from occurring due to friction between the post and the hole.

9. The forming apparatus of claim 2, wherein the first die is disposed outside the pressing part to press the object to be pressed, and
the punch is disposed inside the pressing part to press the object to be pressed.

10. The forming apparatus of claim 1, wherein the punch is fixed so as not to move vertically, and
the first die and the second die move vertically.

11. A forming method comprising:
a first process of fixing an object to be pressed by a stripper and a first die;
a second process in which a second die connected to the first die ascends to press the object to be pressed by the stripper and a punch; and
a third process in which the second die further ascends to additionally press the object to be pressed by a pressing part of the second die and the punch,
wherein the pressing part is disposed inside the first die,
the punch is disposed inside the pressing part, and
the first die and the second die are connected to each other by a connection part of a compression member.
